# EUROPÄISCHE PATENTSCHRIFT

(11) **EP 2 372 892 B1**
(45) Veröffentlichungstag und Bekanntmachung des Hinweises auf die Patenterteilung: **13.03.2013**
(21) Anmeldenummer: 10003435.4
(22) Anmeldetag: 30.03.2010
(51) Int. Cl.: H02M 5/458, H02P 3/14, H02P 1/02, H02J 7/34

(54) **Vorrichtung und Verfahren zur Zwischenspeicherung elektrischer Bremsenergie eines an einem Wechselrichter betriebenen Motors**
Device and method for interim storage of electric brake energy of an engine operated on a converter
Dispositif et procédé de stockage intermédiaire de l'énergie de freinage électrique d'un moteur à onduleur

(43) Veröffentlichungstag der Anmeldung: 05.10.2011
(73) Patentinhaber: Michael Koch GmbH, 76698 Ubstadt-Weiher (DE)
(72) Erfinder: Trümpler, Walter, 76227 Karlsruhe (DE); Koch, Michael, 76698 Ubstadt-Weiher (DE)
(74) Vertreter: Durm & Partner

(56) Entgegenhaltungen:
- EP-A2- 1 484 831
- US-A1- 2001 017 238
- US-B1- 6 333 611

## Beschreibung

Die vorliegende Erfindung betrifft eine Vorrichtung zur Zwischenspeicherung elektrischer Bremsenergie eines an einem Wechselrichter mit Zwischenkreis betriebenen Motors sowie ein Verfahren zur Zwischenspeicherung und eine Energiespeichereinrichtung zum Anschluss an einen Zwischenkreis eines Wechselrichters.

In vielen motorisch betriebenen Maschinen ist ein häufig betriebenes Anfahren und Stoppen des Motors gefordert. Beim Anfahren des Motors wird ein hoher Anfahrstrom benötigt; entsprechend hoch ist der Energiebedarf. Beim Bremsen soll der Motor üblicherweise möglichst schnell zum Stillstand kommen. Ein "Auslaufen" des Motors, bis seine kinetische Energie, beispielsweise durch Reibung verbraucht ist, ist für viele Anwendungsfälle nicht akzeptabel. Vielmehr ist das schnelle Erreichen des Motorstillstands zwingend erforderlich. Anwendungsfälle sind z. B. elektrische Pressen.

In der Kunststoff verarbeitenden Industrie werden beispielsweise Extruder motorisch über eine Schnecke betrieben, um eine vorgegebene Kunststoffmenge in den Extruder zu führen. Damit das herzustellende Kunststoffteil die gewünschte Form aufweist, muss die Schnecke ohne Verzögerung zum Stillstand kommen.

Den Anwendungen ist gemeinsam, dass ein häufiges Anfahren und Stoppen stattfindet, in der Regel 2 bis 3 mal pro Minute oder öfter. Die Motoren sind über einen Wechselrichter mit Zwischenkreis an eine Spannungsquelle angeschlossen. Wird der Motor am Versorgungsnetz betrieben, so ist zwischen dem Zwischenkreis und dem Netz ein Gleichrichter geschaltet. Dieses Prinzip wird nicht nur bei stationären Anlagen verwendet, sondern kann auch auf mobile Geräte und Vorrichtungen übertragen werden, z. B. auf ein Regalbediengerät eines Hochregallagers, bei dem die Waren in unterschiedlichen Ebenen positioniert werden.

Bei derartigen Anlagen und in Geräten wird beim Bremsen des Motors Bremsenergie frei, die nicht vom Motor über den Wechselrichter abgeführt werden kann. Eine Netzrückspeisung ist in der Regel nicht vorgesehen, da die notwendigen Komponenten die Anlage stark verteuern würden.

Um die frei werdende Bremsenergie abzuführen, werden deshalb üblicherweise sogenannten Bremswiderstände als Ballastwiderstände eingesetzt, die die Energie aufnehmen und in Wärme umsetzen. Die Zuschaltung des Bremswiderstandes erfolgt typischerweise Ober einen elektronischen Leistungsschalter, der Bestandteil des Wechselrichters ist. Die bedarfsgerechte Ein- und Ausschaltung des Bremswiderstands wird von einer Steuerelektronik des Wechselrichters gesteuert. So ist ein optimales Zusammenwirken des Antriebssystems (einschließlich Wechselrichter) mit dem (eigenständigen) Bremswiderstand gewährleistet. Typischerweise ist der Bremswiderstand eine externe Komponente und wird im Wesentlichen nach der erforderlichen Spitzenleistung und Dauerleistung ausgewählt. Hierbei werden in der Regel marktübliche Bauteile verwendet, die für die verschiedensten Wechselrichter und Spannungen des Motors eingesetzt werden können.

Nachteilig bei der Verwendung von Bremswiderständen ist es jedoch, dass die Bremsenergie in Wärme umgewandelt wird und die Wärme abgeführt werden muss.

Aus der US 6,333,611 B1 ist eine Ansteuerung für eine Spritzgussmaschine bekannt, um den Anlauf des Antriebs aus einem Energiespeicher zu stützen.

Dieser Speicher wird während des Bremsens des Motors teilweise geladen, wobei vor jedem Anlaufvorgang des Motors der Speicher mit einer Ladeeinrichtung auf seinen Maximalwert aufgeladen wird. Hierzu wird eine Ladeschaltung benötigt, die über den Controller des Inverters gesteuert ist. Bei dieser Schaltung ist es jedoch höchst problematisch, dass keine strombegrenzenden Maßnahmen vorgesehen sind und während der Beschleunigung des Motors ein hoher Ausgleichsstrom fließt, der quasi einen Kurzschluss darstellt. Eine ähnliche Vorrichtung beschreibt auch die EP 1 484 831 A2.

Die US 2001/0017238 A1 beschreibt eine Steuerung für einen Aufzug. Hierbei wird mittels einer kleinen Batterie ein Teil der beim Bremsen entstehenden Energie gespeichert. Die Einrichtung zur Energiespeicherung ist Teil der Aufzugssteuerung und an diese angepasst. Die Steuereinheit hat jedoch nur eine geringe Dynamik, weshalb zusätzlich der Einsatz eines Bremswiderstands notwendig ist. Ein großer Teil der Bremsenergie wird in Wärme umgewandelt und verbraucht.

Es besteht somit die Aufgabe im Stand der Technik, eine verbesserte Vorrichtung vorzuschlagen, mit der der an dem Wechselrichter betriebene Motor möglichst schnell zum Stillstand kommt und die eine verbesserte Effizienz aufweist.

Die vorliegende Aufgabe wird gelöst durch eine Vorrichtung zur Zwischenspeicherung elektrischer Bremsenergie mit den Merkmalen des Anspruchs 1, durch eine Energiespeichereinrichtung zum Anschluss an einen Zwischenkreis eines Wechselrichters zur Versorgung eines Motors mit den Merkmalen des Anspruchs 11 sowie durch ein Verfahren mit den Merkmalen des Anspruchs 13.

Die erfindungsgemäße Energiespeichereinrichtung dient zur Zwischenspeicherung elektrischer Bremsenergie eines an einem Wechselrichter betriebenen Motors. Dazu wird die Energiespeichereinrichtung an einem Zwischenkreis eines Wechselrichters angeschlossen. Sie umfasst dazu einen Energiespeicher, eine Erfassungseinheit und eine Steuerelektronik. Die Erfassungseinheit erkennt einen Rückspeisezustand des Wechselrichters, in dem der Motor bremst, also als Generator betrieben wird, und Energie von dem Wechselrichter zu dem Zwischenkreis übertragen wird. Die Steuerelektronik schaltet beim Erkennen des Rückspeisezustands einen Schalter in der Energiespeichereinrichtung derart, dass der Energiespeicher parallel zu dem Zwischenkreiskondensator betrieben wird und Energie aus dem Zwischenkreis aufnimmt.

Der verwendete Schalter in der Energiespeichereinrichtung kann ein elektronischer Schalter sein, beispielsweise ein Halbleiterschalter. Er kann jedoch auch durch eine Mehrzahl von Schaltelementen verwirklicht sein. Beispielsweise kann der Schalter aus einer Kombination von Transistoren und Dioden oder durch ein oder mehrere IGBTs (Insulated Gate Bipolar Transistor) realisiert sein.

Beim Anschluss der Energiespeichereinrichtung an einen Wechselrichter mit Zwischenkreis wird also eine Vorrichtung gebildet, die zur Zwischenspeicherung von elektrischer Bremsenergie eines Motors geeignet ist. Der Motor ist an den Wechselrichter angeschlossen. An den Zwischenkreis ist üblicherweise ein Gleichrichter angeschlossen, über den die Verbindung zum Versorgungsspannungsnetz hergestellt wird. Der Zwischenkreis des Wechselrichters umfasst einen Zwischenkreiskondensator, der parallel zu dem Wechselrichter geschaltet ist. Das Versorgungsspannungsnetz kann beispielsweise das typische 220/230 V-Netz oder das 380/400 V-Netz sein. Es ist auch denkbar, dass andere Netze mit anderen Spannungen und/oder Frequenzen (abweichend von 50 Hz/60 Hz) verwendet werden, wie etwa bei Bahn-Netzen. Der Wechselrichter mit Zwischenkreis und Gleichrichter ist dann entsprechend anzupassen.

Wird der an dem Wechselrichter betriebene Motor abgebremst, so wird Energie von dem Motor an den Wechselrichter übertragen. Der Zwischenkreis mit Zwischenkreiskondensator kann aber nur sehr geringe Energie aufnehmen. Folglich muss die (überschüssige) Energie abgeführt werden. Erfindungsgemäß wird anstelle des Bremswiderstands nun eine Energiespeichereinrichtung eingesetzt, die einen Energiespeicher umfasst, der parallel zu dem Zwischenkreiskondensator geschaltet werden kann, um die Energie vom Zwischenkreiskondensator aufzunehmen und zu speichern.

In einer bevorzugten Ausführungsform erkennt die Steuerelektronik den Speisebetriebs-Zustand des Wechselrichters und steuert einen Schalter der Energiespeichereinrichtung derart, dass er in einer Energieabgabebetriebsart (Pufferbetrieb) betrieben wird, in der Energie vom Energiespeicher in den Zwischenkreis zurückübertragen wird. Dabei wird die im Energiespeicher zuvor gespeicherte Energie dem Motor bei Bedarf und gesteuert zugeführt.

Der Energiespeicher der Energiespeichereinrichtung kann ein mechanischer Energiespeicher oder ein elektrischer Energiespeicher sein. Als mechanischer Energiespeicher bietet sich beispielsweise ein Motor an, der von der rückgespeisten Energie angetrieben wird und die Energie in Form von kinetischer Energie zwischenspeichert. Diese Energie kann später wieder freigegeben werden, indem eine Rückspeisung auf den Zwischenkreiskondensator erfolgt. Bevorzugt wird jedoch ein elektrischer Energiespeicher eingesetzt. Dies kann beispielsweise eine Batterie sein. In einer besonders bevorzugten Ausführungsform ist der elektrische Energiespeicher ein Kondensator, in dem die frei werdende Bremsenergie des Motors gespeichert ist. Die Auswahl und Dimensionierung des Kondensators kann abhängig von den Randbedingungen des Einsatzes und des Spannungsbereichs sowie der zu speichernden Energie erfolgen.

Die Energiespeichereinrichtung weist bevorzugt zusätzlich eine Drossel auf, die in Reihe zu dem Energiespeicher, insbesondere dem Kondensator geschaltet ist. Die Drossel dient als Zwischenspeicher, um in einem Taktbetrieb der Energiespeichereinrichtung die Energie mit dem Energiespeicher auszutauschen, und somit zum "Pumpen" von Energie zu dem Energiespeicherkondensator.

Die Energiespeichereinrichtung soll den üblicherweise eingesetzten Bremswiderstand ersetzen, in welchem die frei werdende Bremsenergie des Motors in Wärme umgewandelt wird. Sie soll also ähnlich wie der Bremswiderstand als externe Komponente zugeschaltet werden und für die verschiedensten Wechseirichter unterschiedlicher Hersteller geeignet sein, damit sie auch als eigenständiges Produkt vermarktet werden kann. Es muss also sichergestellt sein, dass durch den Betrieb der Energiespeichereinrichtung keine negativen Beeinflussungen des Antriebssystems entstehen. Im Gegensatz zu dem passiven Bremswiderstand muss diese Forderung für die aktive Energiespeichereinrichtung mit eigenständiger Steuerelektronik gelten. Es ist deshalb also besonders wichtig, dass der Rückspeisezustand des Wechselrichters zuverlässig erkannt wird. Hierzu bieten sich unterschiedliche Möglichkeiten an.

Bevorzugt weist die Energiespeichereinrichtung eine Messeinheit auf, die eine Zwischenkreisspannung an dem Zwischenkreiskondensator misst. Die Erfassungseinheit vergleicht die gemessene Zwischenkreisspannung mit einem Referenzwert. Sie erkennt den Rückspeisezustand des Wechselrichters, in dem Energie beim Bremsen des Motors zurückgespeist wird, daran, dass die Zwischenkreisspannung oberhalb des Referenzwertes liegt. Der Energiespeicher wird von der Steuerelektronik derart gesteuert, dass die überschüssige Energie aufgenommen wird.

Alternativ kann der Rückspeisezustand des Wechselrichters auch dadurch erkannt werden, dass ein Schaltsignal an einem Schaltausgang des Wechselrichters ausgewertet wird. Erfindungsgemäß erfasst die Erfassungseinheit das Schaltsignal am Schaltausgang des Wechselrichters. Die Energiespeichereinrichtung ist somit nicht nur mit dem Zwischenkreis, sondern mit dem Steuerausgang Wechselrichters verbunden. Sobald ein Schaltsignal an dem Schaltausgang anliegt, erkennt die Erfassungseinheit den Rückspeisezustand des Wechselrichters. In der Praxis weist die Mehrzahl der Wechselrichter diesen Schaltausgang auf, um üblicherweise einen Bremswiderstand zu schalten. Ober den Schaltausgang kann die gesamte generatorische Motorleistung abgeführt werden.

Dieser Schaltausgang wird als "Brems-Chopper"-Ausgang bezeichnet. Die Spannungspegel am Zwischenkreis des Wechselrichters, bei denen der Brems-Chopper-Ausgang ein- bzw. ausgeschaltet wird, werden vom Hersteller des Wechselrichters festgelegt. Durch Auswertung des Schaltausgangs kann die Energiespeichereinrichtung an jeden beliebigen Wechselrichter angeschlossen werden, da das Schaltsignal zum Einschalten der Energiespeichereinrichtung von dem Wechselrichter bestimmt wird. Es ist also sichergestellt, dass eine (automatische) Abstimmung der Energiespeichereinrichtung auf den jeweiligen Wechselrichter erfolgt Dies geschieht ohne Zutun des Anwenders, insbesondere muss die Energiespeichereinrichtung nicht konfiguriert oder eingestellt werden. Bedienfehler sind deshalb ausgeschlossen. Das Risiko einer negativen Beeinflussung der Antriebssysteme ist für den Hersteller eines Wechselrichters ausgeschlossen. Insoweit gleicht die Energiespeichereinrichtung dem bisherigen Bremswiderstand. Für den Endkunden ändert sich nichts. Allerdings weist die Energiespeichereinrichtung gegenüber dem klassischen Bremswiderstand den Vorteil auf, dass die Energie nicht in Wärme umgewandelt wird, sondern wieder freigegeben wird, wenn sie zum Anfahren des Motors benötigt wird. Auch ist es möglich, durch den Energiespeicher in der Energiespeichereinrichtung einen Netzausfall zumindest kurzfristig zu überbrücken.

Die beiden oben genannten Vorgehensweisen ähneln sich von daher, dass die zu speichernde Energie mit einem definierten Strom in den Energiespeicher eingespeist wird. Dieser Strom ist im einfachsten Fall konstant und wird durch "Aussetzbetrieb" des Schaltausgangs des Wechselrichters geschaltet. Es ist jedoch auch möglich, eine Stromanpassung des in der Energiespeichereinrichtung fließenden Stroms vorzunehmen. Somit können der Ladestrom des Energiespeichers und/oder der Entladestrom ("Pufferstrom") (inner halb der Energiespeichereinrichtung) gesteuert werden. Bevorzugt erfolgt diese Stromanpassung in Abhängigkeit der am Zwischenkreis anliegenden Zwischenkreisspannung und somit abhängig von dem Lastzustand des Antriebssystems. Eine derartige Anpassung ist jedoch nur möglich, wenn die Zwischenkreisspannung gemessen werden kann, also die erfindungsgemäße Energiespeichereinrichtung Ober eine Messeinheit verfügt.

Vorzugsweise erfolgt die Anpassung des Ladestroms bzw. Entladestroms zum Laden bzw. Entladen des Energiespeichers derart, dass der Strom für einen unteren Zwischenkreisspannungswert Sᵤ einen unteren Stromwert aufweist. Für einen oberen Zwischenkreisspannungswert Sₒ weist der Strom einen oberen Stromwert auf. Der Betrag des in der Energiespeichereinrichtung fließenden Stroms wird also innerhalb eines Spannungsbands der Zwischenkreisspannung angepasst. Dieses Spannungsband liegt bevorzugt unterhalb der Zwischenkreisspannung, bei der das Schaltsignal an dem Schaltausgang des Wechselrichters anliegt, also unterhalb der Zwischenkreisspannung, wenn das Brems-Chopper-Signal vorhanden ist. Diese Spannung wird auch als Brems-Chopper-Spannung oder Brems-Chopper-Einschaltschwelle bezeichnet.

Vorteilhafterweise erfolgt die Anpassung des Stroms im Speicherbetrieb derart, dass der Strom mit steigender Spannung steigt, und ensprechend umgekehrt im Pufferbetrieb. Beispielsweise kann der Betrag des Stroms für den unteren Zwischenkreisspannungswert Sᵤ bei einem Drittel des Maximalwerts des Stroms liegen, während der Maximalstromwert bei dem oberen Zwischenkreisspannungswert So erreicht wird.

Es hat sich als besonders vorteilhaft erwiesen, wenn der Strombetrag, der in der Energiespeichereinrichtung fließt, der Rückspeiseleistung angepasst ist und somit ein kontinuierlicher Strom fließt (ohne Aussetzbetrieb). Bei diesem Strombetrag sind die auftretenden Verluste in der Energiespeichereinnchtung minimiert, ebenso ist die Wärmeentwicklung reduziert Der Wirkungsgrad wird deutlich verbessert, die Lebensdauer der Bauteile wird verlängert.

Im Rahmen der Erfindung wurde erkannt, dass es vorteilhaft ist, den Referenzwert, bei dem ein Rückspeisezustand des Wechsetrichters erkannt und die Energiespeichereinrichtung parallel zum Wechselrichter geschaltet wird, nicht fest vorzugeben. Dies hat den Vorteil, dass die Energiespeichereinrichtung für unterschiedliche Wechsetrichter und unterschiedliche Spannungsebenen eingesetzt werden kann. Erfindungsgemäß wird deshalb ein adaptives (selbst lemendes) Steuerverfahren angewendet, bei dem die Messeinheit der Energiespeichereinrichtung die Zwischenkreisspannung am Zwischenkreiskondensator misst, die gleichzeitig die Eingangsspannung der Energiespeichereinrichtung ist.

Dazu wird nach dem ersten Einschalten des Wechselrichters die Zwischenkreisspannung gemessen, wenn das Schaltsignal an dem Schaltausgang des Wechselrichters erstmalig anliegt. Es wird also die Brems-Chopper-Einschaltschwelle (Zwischenkreisspannung beim ersten Bremsen des Motors) ermittelt. Aus diesem gemessenen Spannungswert der Zwischenkreisspannung wird dann der Referenzwert zum Erkennen des Rückspeisezustands gebildet, der sogenannte Speicherbetriebswert. Besonders bevorzugt wird dieser Speicherbetriebswert zum Erkennen des Rückspeisezustands, also den Referenzwert, ab dem die Energieaufnahme in der Energiespeichereinrichtung erfolgt, individuell festgelegt. Dazu wird die beim Erkennen des Rückspeisezustands gemessene Zwischenkreisspannung mit einem Korrekturwert beaufschlagt, so dass die gemessene Zwischenkreisspannung und der Korrekturwert den Referenzwert bilden. Vorzugsweise ist der gebildete Speicherbetriebswert unterhalb der gemessenen Zwischenkreisspannung (Brems-Chopper-Einschaltschwelle). Es hat sich als positiv erwiesen, den Korrekturwert auf etwa 2 % bis 15 % des gemessenen Zwischenkreisspannungswerts festzulegen, bevorzugt sind 5 % bis 10 %, besonders bevorzugt 7 %. Dies bietet die Möglichkeit, die Energieaufnahme in der Energiespeichereinrichtung schon zu starten, bevor der von dem Hersteller des Wechselrichters vorgegebene Rückspeise-Spannungswert (Brems-Chopper-Einschaltschwelle) erreicht ist.

Dieses adaptive Verfahren eignet sich insbesondere dann, wenn Spannungsgrenzen für die Anpassung des in der Energiespeichereinrichtung fließenden Stroms vorzunehmen ist. Durch geeignete Wahl des Korrekturwertes können zwei Grenzwerte gebildet werden, nämlich ein unterer Zwischenkreisspannungswert (unterer Speicherbetriebswert) Sᵤ und ein oberer Zwischenkreisspannungswert (oberer Speicherbetriebswert) Sₒ, die die Grenzen des Spannungsbands bilden, innerhalb dessen die Stromanpassung erfolgt.

Alternativ kann der Referenzwert zum Erkennen des Rückspeisezustands auch unabhängig von dem Anliegen des Schaltsignals am Schaltausgang erfolgen. Dazu muss auf geeignete Weise der Spannungswert ermittelt werden, bei dem die Bremsphase des Motors beginnt.

Die Rückspeisung der zwischengespeicherten Energie vom Energiespeicher in den Zwischenkreis erfolgt in analoger Weise. Hierzu wird beispielsweise die Zwischenkreisspannung gemessen, wenn das Schaltsignal nicht mehr am Schaltausgang anliegt (Brems-Chopper-Ausschaltschwelle). Analog kann auch beim Einspeisen in den Zwischenkreis ein (Einspeise-) Spannungsband ermittelt bzw. festgelegt werden, innerhalb dem optional eine Stromanpassung erfolgt. Das Spannungsband liegt zwischen einem oberen Einspeisebetriebswert Eₒ und einem unteren Einspeisebetriebswert Eᵤ, der bevorzugt unterhalb der Brems-Chopper-Ausschaltschwelle liegt.

Die Erfindung wird nachfolgend anhand von in den Figuren dargestellten besonderen Ausführungsformen näher erläutert. Die dort dargestellten Besonderheiten können einzeln oder in Kombination verwendet werden, um bevor zugte Ausgestaltungen der Erfindung zu schaffen. Die beschriebenen Ausführungen stellen keine Einschränkung der durch die Ansprüche in ihrer Allgemeinheit definierten Erfindung dar. Es zeigen:
- Figur 1: ein Prinzipschaltbild einer Vorrichtung mit Wechselrichter, Zwischenkreis und Energiespeichereinrichtung,
- Figur 2: die Schaltungsanordnung der Energiespeichereinrichtung aus Figur 2,
- Figur 3: eine alternative Ausführung der Energiespeichereinrichtung gemäß Figur 2,
- Figur 4: eine alternative Ausführungsform der Energiespeichereinrichtung gemäß Figur 2,
- Figur 5: Spannungspegel der Zwischenkreisspannung für eine Vorrichtung gemäß Figur 2 am 400 V-Netz.

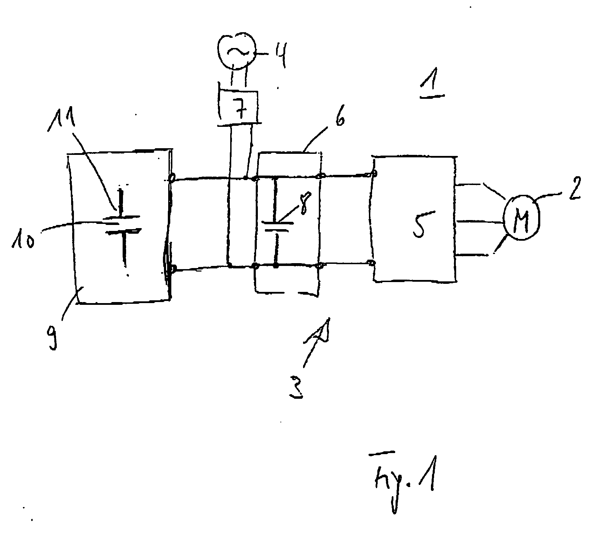

Figur 1 zeigt ein erfindungsgemäßes Antriebssystem 1 mit einem Motor 2, der über einen Umrichter 3 an das Versorgungsnetz 4 angeschlossen ist. Der Umrichter 3 umfasst einen Wechselrichter 5, einen Zwischenkreis 6 und einen Gleichrichter 7. An einem Zwischenkreiskondensator 8 ist eine Energiespeichereinrichtung 9 angeschlossen, so dass sie parallel zu dem Zwischenkreiskondensator 8 geschaltet ist.

Wird der Motor 2 im Bremsbetrieb betrieben, so wird Bremsenergie vom Motor 2 über den Wechselrichter 5 in den Zwischenkreis 6 übertragen. Der Zwischenkreis 6 kann nur vernachlässigbar wenig dieser Energie in seinem Zwischenkreiskondensator 8 speichern und gibt sie an die Energiespeichereinrichtung 9 ab, die geeignet ist, Bremsenergie aufzunehmen. Im Gegensatz zu einem Bremswiderstand ermöglicht die Energiespeichereinrichtung 9 jedoch, die beim Bremsen freiwerdende Energie elektrisch zu speichern und beim Anfahren des Motors 2 wieder freizugeben, also den Motor 2 mit Energie zu versorgen. Die Energiespeichereinrichtung 9 ermöglicht es auch, einen kurzzeitigen Netzausfall des Versorgungsnetzes 4 zu überbrücken.

In einer bevorzugten Ausführungsform gemäß Figur 1 umfasst die Energiespeichereinrichtung 9 einen als Energiespeicherkondensator 10 ausgebildeten Energiespeicher 11. Der Energiespeicher 11 kann optional auch als Batterie oder als Motor ausgeführt sein, um Energie zwischenzuspeichern.

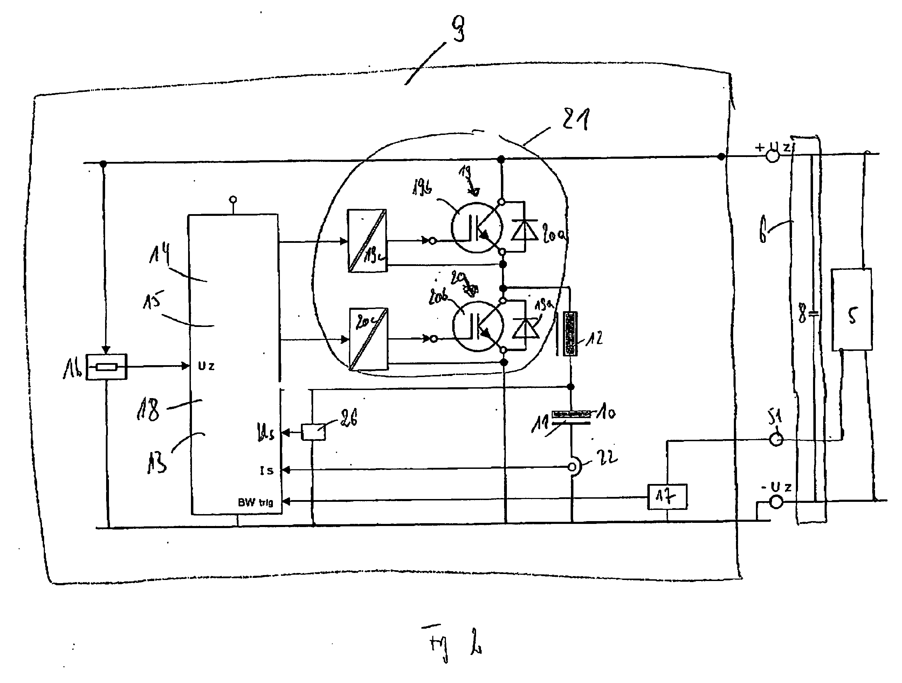

Figur 2 zeigt eine besondere Ausführungsform der Energiespeichereinrichtung 9 im Detail. Der Energiespeicher 11 ist als Energiespeicherkondensator 10 ausgebildet, der parallel zu dem Zwischenkreis 6 betrieben wird. In Reihe mit dem Energiespeicherkondensator 10 ist eine Drossel 12 geschaltet, die schritt- bzw. taktweise Energie aufnimmt und die freiwerdende Energie des Motors an den Energiespeicherkondensator 10 weiterleitet.

Eine Steuerelektronik 13 umfasst eine Erfassungseinheit 14, die teilweise in Software ausgebildet sein kann, und eine Messeinheit 15, die über einen Sensor, beispielsweise einen Messwiderstand 16 die Zwischenkreisspannung misst. Die Erfassungseinheit 14 erkennt einen Rückspeisezustand des Wechselrichters 5, in dem elektrische Bremsenergie vom Motor 2 zum Zwischenkreis 6 übertragen wird.

In der in Figur 2 gezeigten Vorrichtung weist der Wechselrichter 5 einen Schaltausgang 51 auf, der auch als Brems-Chopper-Ausgang bezeichnet wird. Dieser Schaltausgang wird Ober einen Sensor, z. B. einen Steuerwiderstand 17 von der Erfassungseinheit 14 erfasst.

In einer einfachen Steuerung der Energiespeichereinrichtung 9 wird beim Anliegen eines Schaltsignals am Schaftausgang 51 des Wechselrichters der Energiespeicher 11 zugeschaltet. Das Zuschalten erfolgt mittels eines Microcontrollers 18, der Teil der Steuerelektronik 13 ist, und eines Schalters 21, der bevorzugt von der Kombination aus einem Tiefsetzsteller 19 und einem Hochsetzsteller 20 gebildet wird. Der Tiefsetzsteller 19 umfasst eine Diode 19a und einen Transistor 19b; der Hochsetzsteller 20 umfasst eine Diode 20a und einen Transistor 20b. Der Tiefsetzsteller 19 und der Hochsetzsteller 20 werden jeweils über einen Gate-Treiber 19c bzw. 20c vorzugsweise mit Potenzialtrennung angesteuert. Um den Energiespeicher 11 für den Speicherbetrieb zuzuschalten, wird der Tiefsetzsteller 19 eingesetzt. Für den Pufferbetrieb wird der Hochsetrsteller 20 verwendet.

In dieser Ausführungsform wird also der Energiespeicher 11 in Abhängigkeit von einem Schaltsignal am Schaltausgang 51 des Wechselrichters 5 geschaltet. Sobald der Schaltausgang 51 ausgeschaltet wird, das Schaltsignal also nicht mehr anliegt, wird von der Energiespeichereinrichtung 9 erkannt, dass keine weitere Bremsenergie von dem Motor 2 zugeführt wird.

Für eine effiziente Leistungsaufnahme auf dem Energiespeicherkondensator 10 wird dieser in einer bevorzugten Ausführungsform vorgeladen. Bevorzugt wird die Spannung an dem Energiespeicherkondensator 10 so eingestellt, dass diese Anfangsspannung ca. 25 % bis 50 % seiner Kondensatomennspannung beträgt. Zur Überwachung der Spannung in dem Energiespeicherkondensator 10 wird sie Ober einen Sensor, z. B. einen Messwiderstand 26 erfasst und der Steuerelektronik 13 oder der Erfassungseinheit 14 zugeführt. Mittels dieses Messwiderstands 26 kann auch beurteilt werden, wenn der maximale Ladegrad des Energiespeicherkondensators 10 erreicht wird. Die Spannungsmessung kann kontinuierlich, periodisch oder zu fest vorgegebenen Zeitpunkten erfolgen.

In einer bevorzugten Ausführungsform erkennt die Erfassungseinheit 14 einen "Speisebetriebszustand" des Wechselrichters 5, in dem Energie von dem Zwischenkreis 6 zu dem Wechselrichter 5 übertragen wird und der Wechselrichter 5 den Motor 2 speist. Dies ist der Normalbetrieb des Motors 2. In einer bevorzugten Ausführungsform wird der Speisebetriebszustand des Motors 2 von der Erfassungseinheit 14 dadurch erkannt, dass die Zwischenkreisspannung den Referenzwert um einen vorgegebenen Wert unterschreitet. Es erfolgt nun ein Umschalten derart, dass die in dem Energiespeicherkondensator 10 gespeicherte Energie dem Motor 2 zugeführt wird. Hierzu wird der Hochsetzsteller 20 eingesetzt, so dass in dem Energiespeicher 11 zwischengespeicherte Energie Ober die Drossel 12 auf den Zwischenkreiskondensator 8 übertragen wird.

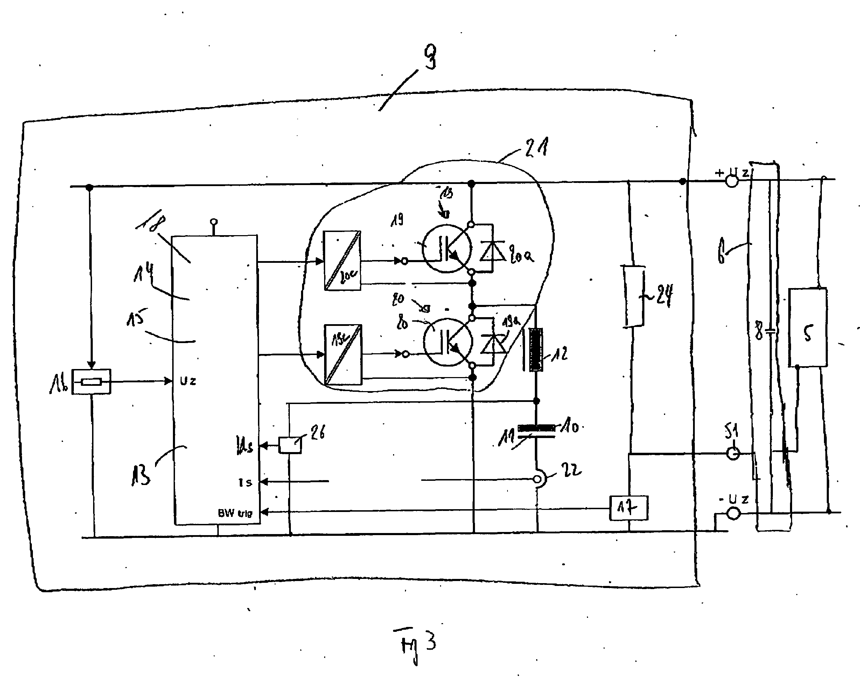

Alternativ kann sowohl für das Zwischenspeichern von Energie in der Energiespeichereinrichtung 9 als auch für das Rückführen von Energie aus dem Energiespeicher 11 zu dem Motor 2 in einem adaptiven Steuerverfahren erfolgen. Hierzu wird die Energiespeichereinrichtung 9 vorzugsweise an den Schaltausgang 51 angeschlossen und der Schaltzustand des Schaltausgangs 51 erfasst. Jedoch wird das Einschalten eines Schaltsignals am Schaltausgang 51 nicht zum direkten Einschalten des Speicherbetriebs der Energiespeichereinrichtung 9 verwendet Im Einschaltzeitpunkt wie auch im Ausschaltzeitpunkt des Schaltausgangs 51 wird die Zwischenkreisspannung am Zwischenkreiskondensator 8 gemessen. Diese Spannungswerte (Speicherbetriebswert bzw. Einspeisebetriebswert) werden als Bezugsgrößen für den weiteren Betrieb der Energiespeichereinrichtung 9 verwendet. Bevorzugt verfügt die Energiespeichereinrichtung 9 deshalb über einen Datenspeicher, der in dem Microcontroller 18 integriert sein kann. Er ist in Figur 3 nicht gezeigt.

Das Einschalten des Speicherbetriebs erfolgt nun bei einer Zwischenkreisspannung (Speicherbetriebswert), die unterhalb des beim Einschalten des Schaltausgangs 51 gemessenen Zwischenkreisspannung U_{ZKm} liegt. Vorzugsweise wird dieser Speicherbetriebswert auf ca. 5 % - 10 % unterhalb der gemessenen Zwischenkreisspannung U_{ZKm} festgesetzt. In einer bevorzugten Ausführungsform wird ein Referenz- oder Grenzwert zum Einschalten des Energiespeichers 11 in den Datenspeicher der Energiespeichereinrichtung 9 abgespeichert.

Optional kann aus den beim Einschalten und Ausschalten des Schaltausgangs 51 gemessenen Zwischenkreisspannungen eine Anpassung des Ladestroms bzw. Rückladestroms in Abhängigkeit vom Lastzustand des Antriebssystems 1 erfolgen. Beispielsweise wird mittels eines Stromsensors 22 der Strom gemessen, der in den Energiespeicher fließt. Der Strom kann in Abhängigkeit der Zwischenkreisspannung angepasst werden. Die Steuerung der Stromanpassung erfolgt bevorzugt durch den Microcontroller 18.

Die Energiespeichereinrichtung 9 in Figur 3 weist bevorzugt einen Bremswiderstand 24 auf, der parallel zu dem Energiespeicher 11 angeordnet ist. Vorzugsweise ist der Bremswiderstand 24 derart angeordnet, dass beim Überschreiten eines oberen Schwellwerts oder beim Überschreiten eines vorgegebenen Ladegrads des Energiespeichers 11 ein Strom automatisch durch den Bremswiderstand 24 fließt und Energie von dem Zwischenkreis 9 auf den Bremswiderstand 24 übertragen wird. Die Energie wird dabei im Bremswiderstand 24 in Wärme umgewandelt. Der Bremswiderstand ist zwischen dem Schaltausgang 51 des Wechselrichters 5 und dem positiven Anschluss (+U_{z}) der Energiespeichereinheit 9 angeordnet. Der Bremswiderstand 24 ist bevorzugt für die maximale Spitzenleistung des Antriebssystems 1 ausgelegt, jedoch nur für eine geringe Dauerleistung. Entsprechend klein fällt seine Bauform aus.

Beim ersten Auftreten des Rückspeisezustands des Wechselrichters 5, wenn also ein Schaltsignal erstmalig an dem Schaltausgang 51 anliegt, wird der Bremswiderstand 24 eingeschaltet und gleichzeitig der Spannungspegel des Zwischenkreises 6 erfasst. Der Spannungswert wird messtechnisch von der Messeinheit 15 erfasst und als Referenz für den weiteren Betrieb in einem Datenspeicher z. B. im Microcontroller 18 abgespeichert. Der Einschaltpegel der Energiespeichereinrichtung 9 (Speicherbetriebswert) wird nun unterhalb der beim Einschalten des Schaltausgangs 51 gemessenen Zwischenkreisspannung U_{ZKm} gelegt. Beispielsweise kann der Einschaltpegel 5 % unterhalb dem gemessenen Spannungspegel U_{ZKm} liegen oder 10 V - 20 V unter dem Wert.

Dies hat zur Folge, dass im "normalen" Betrieb des Antriebssystems 1 die Energiespeichereinrichtung 9 bereits eingeschaltet wird, bevor der Wechselrichter 5 das Schaltsignal für den Bremsspeicherbetrieb gibt. Die freiwerdende Bremsenergie des Motors 2 wird folglich in der Energiespeichereinrichtung 9 zwischengespeichert und nicht im Bremswiderstand 24 in Wärme umgewandelt, wie im Stand der Technik üblich.

Daraus ergeben sich folgende Vorteile:
1. Wird die rückgespeiste Bremsleistung des Antriebssystems 1 größer als die Leistung, die die Energiespeichereinrichtung 9 aufnehmen kann, so steigt die Zwischenkreisspannung am Zwischenkreis 6 weiter an, bis der Ansprechpegel des Schaltausgangs 51 (Brems-Chopper-Einschaltschwelle) erreicht wird. Nun wird der Bremswiderstand 24 zugeschaltet und unterstützt damit den Energiespeicher 11. Dies kann insbesondere dann erfolgen, wenn der Energiespeicherkondensator 10 noch nicht seine Anfangsspannung erreicht hat, beispielsweise bei einer am Energiespeicherkondensator 10 anliegenden Spannung von kleiner als 25 % bis kleiner als 50 % der Kondensatomennspannung.
2. Ist die maximale Spannung am Energiespeicherkondensator 10 erreicht, so muss der Speicherbetrieb zum Schutz des Energiespeicherkondensators 10 beendet werden. Nun wird der Bremswiderstand 24 zugeschaltet, so dass ein Notbetrieb möglich ist. Der Motor lässt sich also nach wie vor bremsen. Lediglich in diesem Fall wird die Bremsenergie in Wärme umgewandelt. Sobald der Energiespeicherkondensator 10 wieder (wenigstens teilweise) entladen ist, übernimmt der Energiespeicher 11 die Speicherfunktion.
3. Fallen Teile der Energiespeichereinrichtung 9 aus technischen Gründen aus, beispielsweise bei einem defekten Energiespeicherkondensator 10 oder einer defekten Steuerelektronik 13, setzt ebenfalls automatisch ein Notbetrieb ein, in dem der Bremswiderstand 24 zugeschaltet wird. Dieser "Notbetrieb" setzt automatisch ein, wenn die Zwischenkreisspannung über dem Bremsspannungsgrenzwert (Brems-Chopper-Einschaltschwelle) liegt.

Der Aufwand für diesen durch den zusätzlichen Bremswiderstand 24 erzielten Nutzen ist sehr klein, da keine weiteren Schalteinrichtungen für den Bremswiderstand 24 notwendig sind. Zusätzlich ist der Bremswiderstand 24 baulich klein und kostengünstig, da er nur eine geringe Dauerlast vertragen muss.

Bevorzugterweise kann der Stromfluss durch den Bremswiderstand 24 erfasst werden. Sobald ein häufigeres Einsetzen des Bremswiderstands 24 erfolgt, kann die Steuerelektronik 13 ein Signal ausgeben, das auf einen Fehler hinweist.

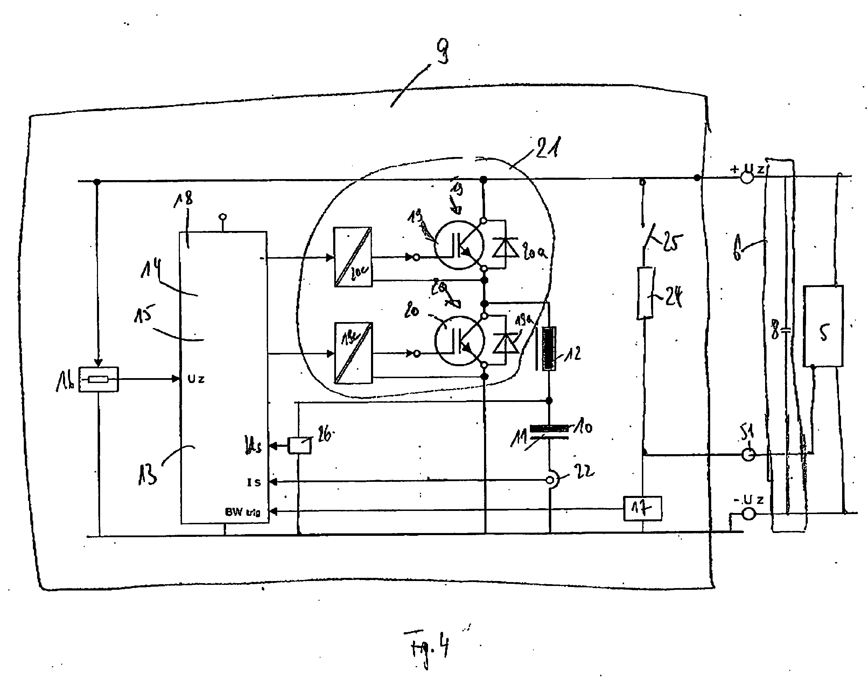

Figur 4 zeigt eine weitere Ausführungsform der Energiespeichereinrichtung 9, die ebenfalls einen Bremswiderstand 24 vorsieht und dadurch erweitert ist, dass in Reihe zu dem Bremswiderstand 24 ein Bremswiderstandschalter 25 angeordnet ist. Dieser bevorzugte Bremswiderstandschalter 25 ermöglicht es, den Bremswiderstand 24 gewollt zu schalten. In einer bevorzugten Ausführungsform wird der Bremswiderstandschalter 25 in eine Geschlossenstellung geschaltet, wenn die gemessene Zwischenkreisspannung U_{ZKm} oberhalb eines Bremswiderstand-Einschalt-Grenzwerts liegt, der bevorzugt größer als die Brems-Chopper-Einschaltschwelle ist. Beispielsweise kann der Bremswiderstandschalter 25 ein Relais sein, das gegen den positiven Anschluss (+U_{z}) der Energiespeichereinrichtung 9 geschaltet ist. Der Bremswiderstandschalter 25 wird durch die Steuerelektronik 13 der Energiespeichereinrichtung 9 geschaltet. Sie bestimmt also, ob und wann der Bremswiderstand 24 eingesetzt wird. Bei geeigneter Auswahl des Bremswiderstandschalters 25, beispielsweise wenn er im Fehlerfall der Energiespeichereinrichtung 9 selbsttätig in die Geschlossenstellung schaltet, kann die Sicherheit des Antriebssystems deutlich erhöht werden.

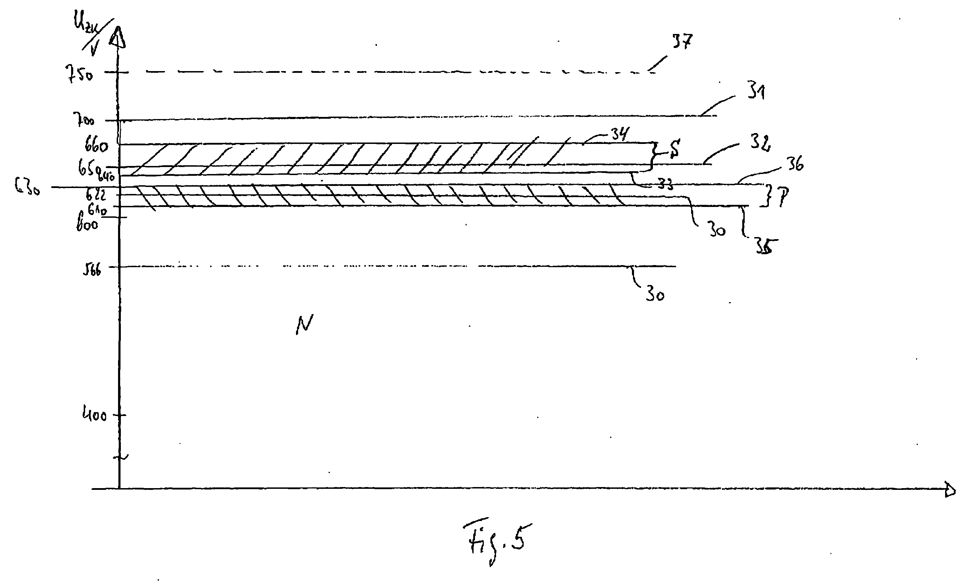

Figur 5 zeigt am Beispiel eines Antriebssystems 1, das an einem 400 V-Versorgungsnetz betrieben wird, die Spannungspegel der Zwischenkreisspannung, bei denen die Schaltvorgänge erfolgen. Bei der Netzspannung von 400 V ergibt sich eine Spitzengleichrichtungsspannung 30 von etwa 566 V. Dieser Wert kennzeichnet den Normalbetriebszustand N. Lässt man Spannungsschwankungen von + 10% zu, so erhöht sich dieser Wert auf 622 V.

Der Schaltausgang 51 des Wechselrichters schaltet das Schaltsignal bei einer Zwischenkreisspannung von beispielsweise 700 V auf. Ab dieser Brems-Chopper-Einschaltschwelle 31 von 700 V, wird also die Energiespeichereinrichtung 9 in einer einfachen Ausführungsform zugeschaltet, wenn die Zuschaltung lediglich über das Schaltsignal am Schaltausgang 51 erfolgt, wie oben beschrieben.

Ist das Schaltsignal am Schaltausgang 51 das einzige Schaltsignal, so wird bei einer Brems-Chopper-Ausschaltschwelle 32 von 650 V der Speicherbetrieb der Energiespeichereinrichtung 9 beendet. Bei einer unterhalb der Brems-Chopper-Ausschaltschwelle 32 liegenden Spannung 36 wird auf den sogenannten Pufferbetrieb umgeschaltet, bei dem der Motor mit Energie aus der Energiespeichereinrichtung 9 versorgt wird.

Bei einem angepassten, gesteuerten Betrieb, wird eine Energieaufnahme beim Bremsen des Motors schon unterhalb der Brems-Chopper-Einschaltschwelle 31 gestartet. Der Spannungsbereich für diesen Speicherbetrieb S beginnt bei ca. 640 V. In dem gezeigten Beispiel ist dieser Wert der untere Zwischenkreisspannungswert Sᵤ (unterer Speicherbetriebs-Grenzwert 33). Bei einer Stromanpassung wird bei diesem ein unterer Stromwert für den in den Energiespeicher 11 fließenden Strom eingestellt. Bevorzugt liegt der Stromwert bei einem Drittel des Maximalstromwerts. Bei etwa 660 V liegt der obere Zwischenkreisspannungswert Sₒ (oberer Speicherbetriebs-Grenzwert 34), bei dem der obere Stromwert für den Speisestrom des Energiespeichers 11 erreicht ist. Dieser Stromwert kann beispielsweise 100 % des Maximalstromwerts sein. Beim Überschreiten der Brems-Chopper-Einschaltschwelle 31 kann optional der fakultative, zusätzliche Bremswiderstand 24 zugeschaltet werden.

Die Stromanpassung des Speisestroms findet folglich in einem Spannungsband S von 640 V bis 660 V statt. Sie erfolgt vorzugsweise durch Taktung, wobei der Tiefsetzsteller 19 von dem Microcontroller 18 der Steuerelektronik 13 entsprechend angesteuert wird.

Bei einem geregelten Betrieb der Energiespeichereinrichtung 9 erfolgt auch der sogenannte Pufferbetrieb P oder Einspeisebetrieb, also der Betriebszustand, bei dem sich der Wechselrichter 5 in dem Speisebetriebszustand befindet und Energie vom Energiespeicher 11 zum Motor 2 übertragen wird, in einem Spannungsband P, das sich beispielsweise von ca. 610 V (unterer Einspeisebetriebs-Grenzwert 35) bis 630 V (oberer Einspeisebetriebs-Grenzwert 36) erstreckt. In diesem Spannungsband P des Pufferbetriebs kann ebenfalls eine Stromanpassung derart erfolgen, dass durch Taktung des Hochsetzstellers der Strom in Abhängigkeit vom Spannungswert geregelt wird.

Eine derartige Stromregelung sowohl für den Rückspeisebetrieb wie auch den Einspeisebetrieb hat sich als vorteilhaft erwiesen, da bei einem möglichst kleinen Strom und bei geringer Taktung die Effektivität der Energiespeichereinrichtung 9 steigt, während gleichzeitig die Welligkeit der Spannung am Zwischenkreis 6 sinkt. Somit sinken auch die Verluste insgesamt, insbesondere die Eigenverluste. Darüber hinaus hat eine geringe Taktung den Vorteil, dass die Lebensdauer der Energiespeichereinrichtung 9 erhöht wird. Auftretende Geräusche vom Takten und Schalten werden reduziert.

Wie Figur 5 zu entnehmen ist, findet eine Sicherheitsabschaltung bei beispielsweise 750 V statt, also deutlich oberhalb der Brems-Chopper-Einschaltschwelle 31. Erreicht die Zwischenkreisspannung die Sicherheitsabschaltschwelle 37, wird das Antriebssystem 1 insgesamt abgeschaltet. Die Sicherheitsabschaltschwelle 37 kann auch andere Werte annehmen; sie liegt bei 400 V Versorgungsspannung bevorzugt zwischen 710 V und 850 V.

## Patentansprüche

1. Vorrichtung zur Zwischenspeicherung elektrischer Bremsenergie eines an einem Wechselrichter mit Zwischenkreis betriebenen Motors, umfassend einen Wechselrichter, einem Zwischenkreis und eine Energiespeichereinrichtung,
wobei
der Zwischenkreis (6) einen Zwischenkreiskondensator (8) umfasst, der parallel zum Wechselrichter (5) angeordnet ist,
der Wechselrichter (5) zum Anschluss an den Motor (2) eingerichtet ist und zwischen dem Motor (2) und dem Zwischenkreis (6) angeschlossen ist, und der Wechselrichter (5) einen Rückspeisezustand aufweist, in dem Energie von dem Wechselrichter (5) in den Zwischenkreiskondensator (8) des Zwischenkreises (6) übertragen wird,
die Energiespeichereinrichtung (9) einen Energiespeicher (11), eine Erfassungseinheit (14) und eine Steuerelektronik (13), sowie eine Messeinheit (15) umfasst, die eine Zwischenkreisspannung U_{ZKm} an dem Zwischenkreiskondensator (8) misst, und wobei
- die Erfassungseinheit (14) den Rückspeisezustand des Wechselrichters (5) erkennt,
- die Steuerelektronik (13) beim Erkennen des Rückspeisezustands einen Schalter (21) der Energiespeichereinrichtung (9) derart in eine Energieaufnahmestellung schaltet, dass der Energiespeicher (11) parallel zu dem Zwischenkreiskondensator (8) betrieben wird und der Energiespeicher (11) Energie aus dem Zwischenkreis (6) aufnimmt
- der Wechselrichter (5) einen Schaltausgang (51) für ein von der Erfassungseinheit (14) detektierbares Schaltsignal aufweist und die Erfassungseinheit (14) den Rückspeisezustand des Wechselrichters (5) erkennt, wenn das Schaltsignal an dem Schaltausgang (51) des Wechselrichters (5) anliegt und
**dadurch gekennzeichnet, dass**
die Messeinheit (15) die Zwischenkreisspannung an dem Zwischenkreiskondensator (8) misst, wenn nach dem Einschalten des Wechselrichters (5) ein Schaltsignal zum ersten Mal an einem Schaltausgang (51) des Wechselrichters (5) anliegt, wobei aus der gemessenen Zwischenkreisspannung U_{ZKm} der Referenzwert zum Erkennen des Rückspeisezustands gebildet wird.

2. Vorrichtung nach Anspruch 1, **dadurch gekennzeichnet, dass** die Erfassungseinheit (14) den Rückspeisezustand des Wechselrichters (5) erkennt, wenn die gemessene Zwischenkreisspannung U_{ZKm} oberhalb eines Referenzwerts liegt.

3. Vorrichtung nach Anspruch 2, **dadurch gekennzeichnet, dass** der Referenzwert aus der gemessenen Zwischenkreisspannung U_{ZKm} und einem Korrekturwert K gebildet wird, vorzugsweise derart, dass der gebildete Referenzwert unterhalb der gemessenen Zwischenkreisspannung U_{zKm} liegt.

4. Vorrichtung nach einem der vorhergehenden Ansprüche, **dadurch gekennzeichnet, dass** die Energiespeichereinrichtung (9) einen Hochsetzsteller (20) und/oder einen Tiefsetzsteller (19) umfasst.

5. Vorrichtung nach einem der vorhergehenden Ansprüche, **dadurch gekennzeichnet, dass** der in der Energiespeichereinrichtung (8) fließende Strom in Abhängigkeit der am Zwischenkreis (6) anliegenden Spannung angepasst wird.

6. Vorrichtung nach einem der vorhergehenden Ansprüche, **dadurch gekennzeichnet, dass** die Energiespeichereinrichtung (9) einen Bremswiderstand (24) aufweist, der parallel zu dem Energiespeicher (11) angeordnet ist.

7. Vorrichtung nach Anspruch 6, **dadurch gekennzeichnet, dass** der Bremswiderstand (24) derart angeordnet ist, dass beim Überschreiten eines oberen Schwellwerts oder beim Überschreiten eines vorgegebenen Ladegrads des Energiespeichers (11) ein Strom durch den Bremswiderstand (24) fließt und Energie von dem Zwischenkreis (6) auf den Bremswiderstand (24) übertragen wird, wobei der Bremswiderstand (24) bevorzugt zwischen dem Schaltausgang (51) des Wechselrichters (5) und dem positiven Anschluss der Energiespeichereinrichtung (9) angeordnet ist.

8. Vorrichtung nach einem der vorhergehenden Ansprüche, **dadurch gekennzeichnet, dass** die Erfassungseinheit (14) einen Speisebetriebs-Zustand des Wechselrichters (5) erkennt, in dem Energie von dem Zwischenkreis (6) zu dem Wechselrichter (5) übertragen wird.

9. Vorrichtung nach Anspruch 8, **dadurch gekennzeichnet, dass** die Steuerelektronik (13) beim Erkennen des Speisebetrieb-Zustands einen Schalter (21) der
Energiespeichereinrichtung (9) derart in eine Energieabgabestellung schaltet, dass Energie von dem Energiespeicher (11) in den Zwischenkreis (6) übertragen wird.

10. Energiespeichereinrichtung zum Anschluss an einen Zwischenkreis eines Wechselrichters und zur Zwischenspeicherung elektrischer Bremsenergie eines an dem Wechselrichter betriebenen Motors, in einer Vorrichtung nach einem der vorhergehenden Ansprüche, umfassend einen Energiespeicher (11), eine Erfassungseinheit (14) und eine Steuerelektronik (13), sowie , eine Messeinheit (15), die eine Zwischenkreisspannung U_{ZKm} an dem Zwischenkreiskondensator (8) misst,
wobei
die Erfassungseinheit (14) einen Rückspeisezustand des Wechselrichters (5), in dem der Motor (2) als Generator betrieben wird und Energie von dem Wechselrichter (5) zu dem Zwischenkreis (6) übertragen wird, erkennt, wenn ein von der Erfassungseinheit (14) detektierbares Schaltsignal an einem Schaltausgang (51) des Wechselrichters (5) anliegt und
die Steuerelektronik (13) beim Erkennen des Rückspeisezustands einen Schalter (21) der Energiespeichereinrichtung (9) derart schaltet, dass der Energiespeicher (11) parallel zu dem Zwischenkreiskondensator (8) betrieben wird und der Energiespeicher (11) Energie aus dem Zwischenkreis (6) aufnimmt.
**dadurch gekennzeichnet, dass**
die Messeinheit (15) die Zwischenkreisspannung an dem Zwischenkreiskondensator (8) misst, wenn nach dem Einschalten des Wechselrichters (5) ein Schaltsignal zum ersten Mal an einem Schaltausgang (51) des Wechselrichters (5) anliegt, wobei aus der gemessenen Zwischenkreisspannung U_{Zkm} der Referenzwert zum Erkennen des Rückspeisezustands gebildet wird.

11. Energiespeichereinrichtung nach dem vorhergehenden Anspruch **dadurch gekennzeichnet, dass** die Erfassungseinheit (14) den Rückspeisezustand des Wechselrichters (5) erkennt, wenn die gemessene Zwischenkreisspannung U_{ZKm} oberhalb eines Referenzwerts liegt.

12. Verfahren zur Zwischenspeicherung elektrischer Bremsenergie eines an einem Wechselrichter mit Zwischenkreis betriebenen Motors, mittels einer Energiespeichereinrichtung (9) zum Anschluss an den Zwischenkreis (6) des Wechselrichters (5), wobei die Energiespeichereinrichtung (9) einen Energiespeicher (11), eine Erfassungseinheit (14) und eine Steuerelektronik (13) umfasst, und der Wechselrichter (5) einen Rückspeisezustand aufweist, in welchem Energie von dem Wechselrichter (5) in den Zwischenkreises (6) übertragen wird, und wobei der Wechselrichter (5) einen Schaltausgang (51) aufweist, an dem im Rückspeisezustand des Wechselrichters (5) ein detektierbares Schaltsignal anliegt,
**gekennzeichnet durch** die folgenden Schritte:
- Detektieren des Schaltsignals am Schaltausgang (51) mittels der Erfassungseinheit (14),
- Erkennen des Rückspeisezustands des Wechselrichters (5) bei Anliegen des Schaltsignals an dem Schaltausgang (51).
- Messen der Zwischenkreisspannung an dem Zwischenkreiskondensator (8) **durch** die die Messeinheit (15), wenn nach dem Einschalten des Wechselrichters (5) ein Schaltsignal zum ersten Mal an einem Schaltausgang (51) des Wechselrichters (5) anliegt
- Bilden eines Referenzwert zum Erkennen des Rückspeisezustands aus der gemessenen Zwischenkreisspannung U_{ZKm}.
- beim Erkennen des Rückspeisezustands des Wechselrichters (5), Schalten eines Schalters (21) der Energiespeichereinrichtung (9) derart, dass der Energiespeicher (11) parallel zu dem Zwischenkreis (6) betrieben wird, und
- Speichern von Energie aus dem Zwischenkreis (6) in dem Energiespeicher (11).

13. Verfahren nach Anspruch 12, **gekennzeichnet durch** die folgenden Schritte:
- Erkennen eines Speisezustands des Wechselrichters (5), in welchem Energie von dem Zwischenkreis (6) zu dem Wechselrichter (5) übertragen wird,
- beim Erkennen des Speisezustands, Schalten des Schalters (21) in eine Energieabgabestellung, und
- Übertragen von Energie von dem Energiespeicher (11) an den Zwischenkreis (6).

## Claims

1. Apparatus for the temporary storage of electrical braking energy of a motor operated on an inverter with an intermediate circuit, including an inverter an intermediate circuit and an energy storage device,
wherein
the intermediate circuit (6) includes an intermediate circuit capacitor (8), which is arranged in parallel with the inverter (5),
the inverter (5) is arranged for connection to the motor (2) and is connected between the motor (2) and the intermediate circuit (6) and the inverter (5) has a back feed state, in which energy is transferred from the inverter (5) into the intermediate circuit capacitor (8) of the intermediate circuit 6;
the energy storage device (9) includes an energy store (11), a detection unit (14) and an electronic controller (13) and also a measuring unit (15), which measures an intermediate circuit voltage Ü_{ZKm} on the intermediate circuit capacitor (8), and wherein,
the detection unit (14) detects the back feed state of the inverter (5),
when the back feed state is detected, the electronic controller (13) switches a switch (21) of the energy storage device (9) into an energy absorption position such that the energy store (11) is operated in parallel with the intermediate circuit capacitor and the energy store (11) absorbs energy from the intermediate circuit (6),
the inverter (5) includes a switching output (51) for a switching signal detectable by the detection unit (14) and the detection unit (14) detects the back feed state of the inverter (5) when the switching signal is present on the switching output (51) of the inverter (5) and
**characterised in that**
the measuring unit (51) measures the intermediate circuit voltage on the intermediate circuit capacitor (8), when after switching on the inverter (5), a switching signal is present for the first time on a switching output (51) of the inverter (5), wherein the reference value for detecting the back feed state is formed from the measured intermediate circuit voltage U_{ZKm.}

2. Apparatus as claimed in claim 1, **characterised in that** the detection unit (14) detects the back feed state of the inverter (5) when the measured intermediate circuit voltage U_{zkm} is above a reference value.

3. Apparatus as claimed in claim 2, **characterised in that** the reference value is formed from the measured intermediate circuit voltage U_{zKm} and a correction value K, preferably such that the reference value formed lies below the measured intermediate circuit voltage U_{ZKm}.

4. Apparatus as claimed in one of the preceding claims, **characterised in that** the energy storage device (9) includes a step-up converter (20) and/or a step-down converter (19).

5. Apparatus as claimed in one of the preceding claims, **characterised in that** the current flowing into the energy storage device (8) is adjusted in dependence on the voltage prevailing on the intermediate circuit (6).

6. Apparatus as claimed in one of the preceding claims, **characterised in that** the energy storage device (9) includes a braking resistor (24) which is arranged in parallel with the energy store (11).

7. Apparatus as claimed in claim 6, **characterised in that** the braking resistor (24) is arranged such that when an upper threshold value is exceeded or when a predetermined degree of charging of the energy store (11) is exceeded, a current flows through the braking resistor (24) and energy is transferred from the intermediate circuit (6) to the braking resistor (24), wherein the braking resistor (24) is preferably arranged between the switching output (51) of the inverter (6) and the positive connection of the energy storage device (9).

8. Apparatus as claimed in one of the preceding claims, **characterised in that** the detection unit (14) detects a feed operation state of the inverter (5), in which energy is transferred from the intermediate circuit (6) to the inverter (5).

9. Apparatus as claimed in claim 8, **characterised in that** when the feed operation state is detected, the electronic controller (13) switches a switch (21) of the energy storage device (9) into an energy delivery position such that energy is transferred from the energy store (11) into the intermediate circuit (6).

10. An energy storage device for connection to an intermediate circuit of an inverter and for temporarily storing electrical braking energy of a motor operated on the inverter in an apparatus as claimed in one of the preceding claims, including an energy store (11), a detection unit (14) and an electronic controller (13) and also a measuring unit (15) which measures an intermediate circuit voltage U_{ZKm} at the intermediate circuit capacitor (8),
wherein
the detection unit (14) detects a back feed state of the inverter (5), in which the motor (2) is operated as a generator and energy is transferred from the inverter (5) to the intermediate circuit (6), when a switching signal detectable by the detection unit (14) is present at a switching output (51) of the inverter (5), and
when the back feed state is detected, the electronic controller (13) switches a switch (21) of the energy storage device (9) such that the energy store (11) is operated in parallel with the intermediate circuit capacitor (8) and the energy store (11) absorbs energy from the intermediate circuit (6),
**characterised in that**,
the measuring circuit (15) measures the intermediate circuit voltage at the intermediate circuit capacitor (8) when, after switching on the inverter (5), a switching signal is present for the first time at a switching output (51) of the inverter (5), wherein the reference value for detecting the back feed state is formed from the measured intermediate circuit voltage U_{ZKm}.

11. An energy storage device as claimed in the preceding claim, **characterised in that** the detection unit (14) detects the back feed state of the inverter (5) when the measured intermediate circuit voltage U_{ZKm} is above a reference value.

12. A method of temporarily storing electrical braking energy of a motor operated on an inverter with an intermediate circuit by means of an energy storage device (9) for connection to the intermediate circuit (6) of the inverter (5), wherein the energy storage device (9) includes an energy store (11), a detection unit (14) an electronic controller (13) and the inverter (5) has a back feed state, in which energy is transferred from the inverter (5) into the intermediate circuit (6) and wherein the inverter (6) has a switching output (51), on which, in the back feed state of the inverter (5), there is a detectable switching signal,
**characterised by** the following steps:
detecting the switching signal at the switching output (51) by means of the detection unit (14),
detecting the back feed state of the inverter (5) when the switching signal is present on the switching output (51), measuring the intermediate circuit voltage at the intermediate circuit capacitor (8) by the measuring unit (15), when, after switching on the inverter (5), a switching signal is present for the first time on a switching output (51) of the inverter (5),
forming a reference value for detecting the back feed state from the measured intermediate circuit voltage U_{ZKm},
when the back feed state of the inverter (5) is detected, switching a switch (21) of the energy storage device such that the energy store (11) is operated in parallel with the intermediate circuit (6), and
storing energy from the intermediate circuit (6) in the energy store (11).

13. A method as claimed in claim 12, **characterised by** the following steps:
detecting a feed state of the inverter (5), in which energy is transferred from the intermediate circuit (6) to the inverter (5),
when the feed state is detected, switching the switch (21) into an energy delivery position, and
transferring energy from the energy store (11) to the intermediate circuit (6).

## Revendications

1. Dispositif de stockage intermédiaire d'énergie de freinage électrique d'un moteur fonctionnant sur un onduleur à circuit intermédiaire, comprenant un onduleur, un circuit intermédiaire et un dispositif d'accumulation d'énergie,
le circuit intermédiaire (6) comprenant un condensateur de circuit intermédiaire (8) qui est monté en parallèle à l'onduleur (5),
l'onduleur (5) étant configuré pour être raccordé au moteur (2) et étant raccordé entre le moteur (2) et le circuit intermédiaire (6), et l'onduleur (5) présentant un état d'alimentation de retour dans lequel l'énergie est transportée de l'onduleur (5) dans le condensateur de circuit intermédiaire (8) du circuit intermédiaire (6),
le dispositif d'accumulation d'énergie (9) comprenant un accumulateur d'énergie (11), une unité de détection (14) et une électronique de commande (13), ainsi qu'une unité de mesure (15) qui mesure une tension de circuit intermédiaire U_{ZKm} sur le condensateur de circuit intermédiaire (8), et
- l'unité de détection (14) reconnaissant l'état d'alimentation de retour de l'onduleur (5),
- l'électronique de commande (13), lorsqu'elle reconnaît l'état d'alimentation de retour, commute un commutateur (21) du dispositif d'accumulation d'énergie (9) dans une position d'absorption d'énergie de telle sorte que l'accumulateur d'énergie (11) fonctionne en parallèle au condensateur de circuit intermédiaire (8) et que l'accumulateur d'énergie (11) absorbe de l'énergie en provenance du circuit intermédiaire (6),
- l'onduleur (5) comportant une sortie de commutation (51) pour un signal de commutation détectable par l'unité de détection (14), et l'unité de détection (14) reconnaissant l'état d'alimentation de retour de l'onduleur (5) lorsque le signal de commutation est appliqué à la sortie de commutation (51) de l'onduleur (5), et
**caractérisé en ce que**
l'unité de mesure (15) mesure la tension de circuit intermédiaire sur le condensateur de circuit intermédiaire (8) lorsque, après la mise en circuit de l'onduleur (5), un signal de commutation est appliqué pour la première fois à une sortie de commutation (51) de l'onduleur (5), la valeur de référence servant à reconnaître l'état d'alimentation de retour étant formée à partir de la tension de circuit intermédiaire mesurée U_{Zkm}.

2. Dispositif selon la revendication 1, **caractérisé en ce que** l'unité de détection (14) reconnaît l'état d'alimentation de retour de l'onduleur (5) lorsque la tension de circuit intermédiaire mesurée U_{ZKm} se trouve au-dessus d'une valeur de référence.

3. Dispositif selon la revendication 2, **caractérisé en ce que** la valeur de référence est formée à partir de la tension de circuit intermédiaire mesurée U_{ZKm} et d'une valeur de correction K, de préférence de telle sorte que la valeur de référence formée se trouve au-dessous de la tension de circuit intermédiaire mesurée U_{ZKm}.

4. Dispositif selon l'une des revendications précédentes, **caractérisé en ce que** le dispositif d'accumulation d'énergie (9) comprend un convertisseur élévateur (20) et/ou un convertisseur abaisseur (19).

5. Dispositif selon l'une des revendications précédentes, **caractérisé en ce que** le courant circulant dans le dispositif d'accumulation d'énergie (8) est ajusté en fonction de la tension appliquée au circuit intermédiaire (6).

6. Dispositif selon l'une des revendications précédentes, **caractérisé en ce que** le dispositif d'accumulation d'énergie (9) présente une résistance de freinage (24) qui est disposée en parallèle à l'accumulateur d'énergie (11).

7. Dispositif selon la revendication 6, **caractérisé en ce que** la résistance de freinage (24) est disposée de telle façon qu'en dépassant une valeur seuil haute ou en dépassant un degré de charge prédéfini de l'accumulateur d'énergie (11) un courant circule à travers la résistance de freinage (24) et de l'énergie est transportée du circuit intermédiaire (6) sur la résistance de freinage (24), la résistance de freinage (24) étant disposée de préférence entre la sortie de commutation (51) de l'onduleur (5) et la borne positive du dispositif d'accumulation d'énergie (9).

8. Dispositif selon l'une des revendications précédentes, **caractérisé en ce que** l'unité de détection (14) reconnaît un état de fonctionnement d'alimentation de l'onduleur (5), dans lequel de l'énergie est transportée du circuit intermédiaire (6) à l'onduleur (5).

9. Dispositif selon la revendication 8, **caractérisé en ce que** l'électronique de commande (13), lorsqu'elle reconnaît l'état de fonctionnement d'alimentation, commute un commutateur (21) du dispositif d'accumulation d'énergie (9) dans une position de restitution d'énergie de telle sorte que l'énergie est transportée de l'accumulateur d'énergie (11) dans le circuit intermédiaire (6).

10. Dispositif d'accumulation d'énergie prévu pour être raccordé à un circuit intermédiaire d'un onduleur et destiné au stockage intermédiaire d'énergie de freinage électrique d'un moteur fonctionnant sur l'onduleur, dans un dispositif selon l'une des revendications précédentes, comprenant un accumulateur d'énergie (11), une unité de détection (14) et une électronique de commande (13), ainsi qu"une unité de mesure (15) qui mesure une tension de circuit intermédiaire U_{ZKm} sur le condensateur de circuit intermédiaire (8),
l'unité de détection (14) reconnaissant un état d'alimentation de retour de l'onduleur (5), dans lequel le moteur (2) fonctionne comme générateur et de l'énergie est transportée de l'onduleur (5) au circuit intermédiaire (6) lorsqu'un signal de commutation détectable par l'unité de détection (14) est appliqué à une sortie de commutation (51) de l'onduleur (5), et
l'électronique de commande (13), lorsqu'elle reconnaît l'état d'alimentation de retour, commutant un commutateur (21) du dispositif d'accumulation d'énergie (9) de telle sorte que l'accumulateur d'énergie (11) fonctionne en parallèle au condensateur de circuit intermédiaire (8) et que l'accumulateur d'énergie (11) absorbe de l'énergie en provenance du circuit intermédiaire (6),
**caractérisé en ce que**
l'unité de mesure (15) mesure la tension de circuit intermédiaire sur le condensateur de circuit intermédiaire (8) lorsque, après la mise en circuit de l'onduleur (5), un signal de commutation est appliqué pour la première fois à une sortie de commutation (51) de l'onduleur (5), la valeur de référence servant à reconnaître l'état d'alimentation de retour étant formée à partir de la tension de circuit intermédiaire mesurée U_{ZKm}.

11. Dispositif d'accumulation d'énergie selon la revendication précédente, **caractérisé en ce que** l'unité de détection (14) reconnaît l'état d'alimentation de retour de l'onduleur (5) lorsque la tension de circuit intermédiaire mesurée U_{ZKm} se trouve au-dessus d'une valeur de référence.

12. Procédé de stockage intermédiaire d'énergie de freinage électrique d'un moteur fonctionnant sur un onduleur à circuit intermédiaire, au moyen d'un dispositif d'accumulation d'énergie (9) prévu pour être raccordé au circuit intermédiaire (6) de l'onduleur (5), le dispositif d'accumulation d'énergie (9) comprenant un accumulateur d'énergie (11), une unité de détection (14) et une électronique de commande (13), et l'onduleur (5) présentant un état d'alimentation de retour dans lequel de l'énergie est transportée de l'onduleur (5) dans le circuit intermédiaire (6), et l'onduleur présentant une sortie de commutation (51) auquel est appliqué, à l'état d'alimentation de retour de l'onduleur (5), un signal de commutation détectable,
**caractérisé par** les étapes suivantes:
- détecter le signal de commutation à la sortie de commutation (51) au moyen de l'unité de détection (14),
- reconnaître l'état d'alimentation de retour de l'onduleur (5) lorsque le signal de commutation est appliqué à la sortie de commutation (51),
- mesurer la tension de circuit intermédiaire sur le condensateur de circuit intermédiaire (8) au moyen de l'unité de mesure (15) lorsque, après la mise en circuit de l'onduleur (5), un signal de commutation est appliqué pour la première fois à une sortie de commutation (51) de l'onduleur (5),
- former une valeur de référence servant à reconnaître l'état d'alimentation de retour à partir de la tension de circuit intermédiaire mesurée U_{ZKm},
- lorsque l'état d'alimentation de retour de l'onduleur (5) est reconnu, commuter un commutateur (21) du dispositif d'accumulation d'énergie (9) de façon à faire fonctionner l'accumulateur d'énergie (11) en parallèle au circuit intermédiaire (6), et
- accumuler de l'énergie en provenance du circuit intermédiaire (6) dans l'accumulateur d'énergie (11).

13. Procédé selon la revendication 12, **caractérisé par** les étapes suivantes:
- reconnaître un état d'alimentation de l'onduleur (5), dans lequel de l'énergie est transportée du circuit intermédiaire (6) à l'onduleur (5),
- lorsque l'état d'alimentation est reconnu, commuter le commutateur (21) dans une position de restitution d'énergie, et
- transporter de l'énergie de l'accumulateur d'énergie (11) au circuit intermédiaire (6).
